(19) Europäisches Patentamt
European Patent Office
Office européen des brevets

(11) **EP 2 174 177 B1**

(12) **EUROPEAN PATENT SPECIFICATION**

(45) Date of publication and mention
of the grant of the patent:
**29.10.2014 Bulletin 2014/44**

(51) Int Cl.:
*G02B 27/30* (2006.01)      *G02B 27/09* (2006.01)
*B29C 67/00* (2006.01)

(21) Application number: **08779491.3**

(22) Date of filing: **21.07.2008**

(86) International application number:
**PCT/SG2008/000262**

(87) International publication number:
**WO 2009/014500 (29.01.2009 Gazette 2009/05)**

(54) **System and method for multi-photon stereolithography and optical system for focusing a beam of light**

System und Verfahren für multi-Photon Stereolithography und optisches System zum Fokussieren eines Lichtstrahlbündels

Système et procédé pour la stéréolithographie multiphotonique et système optique pour la focalisation d'un faisceau lumineux

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **20.07.2007   US 929972 P**

(43) Date of publication of application:
**14.04.2010   Bulletin 2010/15**

(73) Proprietor: **Agency for Science, Technology and Research**
**Singapore 138632 (SG)**

(72) Inventors:
• **KAN, Shyi-Herng**
  **Singapore 138669 (SG)**

• **HSIEH, Tseng-Ming**
  **Singapore 138669 (SG)**
• **YING, Jackie Y.**
  **Singapore 138669 (SG)**

(74) Representative: **Andersson, Inga-Lill et al**
  **Awapatent AB**
  **P.O. Box 45086**
  **104 30 Stockholm (SE)**

(56) References cited:
**WO-A1-89/11085**       **WO-A2-00/74112**
**DE-A1- 10 111 422**    **GB-A- 2 416 946**
**US-A- 4 516 023**      **US-A- 4 906 061**
**US-A- 5 055 663**      **US-A- 5 220 450**
**US-A- 5 257 125**      **US-A- 5 260 578**
**US-A1- 2003 013 047**

**Description**

FIELD OF THE INVENTION

The present invention relates to methods and systems for focusing a beam of light with reduced focal plane distortion, particularly for application in multi-photon stereolithography.

BACKGROUND OF THE INVENTION

Multi-photon, such as two-photon, stereolithography is an emerging, and promising technology, with many potential applications, such as in the semiconductor industry, for photonics devices, in the wireless industry, for microelectromechanical systems (MEMS) or nanoelectromechanical systems (NEMS), in the rapid prototyping industry, in tissue engineering, and in the chemical and pharmaceutical industries. Multi-photon stereolithography (e.g. two-photon polymerization) utilizes localized multi-photon absorption/excitation to induce structural changes in a target. Multi-photon absorption can occur when multiple photons are present simultaneously within a small spatial volume, and the total photon energy equals the excitation energy required to excite an electron in the target. These photons can be simultaneously absorbed, accompanied by the excitation of the electron. The excited electron can subsequently cause chemical reactions (such as polymerization) in the target. By controlling where multiple-photon absorption/excitation occurs in the target, such as by focusing a light beam at a selected focal point on the target and moving the focal point in a pre-selected pattern, small three-dimensional objects can be manipulated and fabricated with precise control, such as with submicron resolution.

Currently known multi-photon stereolithography techniques have some drawbacks. For example, to increase the multi-photon absorption efficiency, the final objective lens is typically immersed in oil to achieve a high resolution and a large numerical aperture. However, the production throughput of known techniques with an oil objective is relatively low, due to factors such as limited size of optical elements, low scan speed (a reported scan speed is about 16 micron/second), and limited scan volume (scan height is typically less than about 1 mm). The target and the lens can also be contaminated by the immersion oil. DE-A-10111422 discloses the features of the respective preambles of claims 1, 9 and 15.

SUMMARY OF THE INVENTION

According to an aspect of the present invention, there is provided a system for multi-photon stereolithography. The system comprises a light source generating a beam of light having a wavelength selected to induce multi-photon absorption in a target material; an optical expander comprising a diverging lens and a converging lens, positioned in a path of the beam to expand the beam through the lenses to produce a collimated beam of the light, a divergence of the collimated beam being dependent on a distance between the diverging lens and the converging lens; a focusing device comprising a dry objective lens, positioned in a path of the collimated beam to focus the collimated beam onto the target material to induce the multi-photon absorption in the target material at a beam waist of the focused beam; a scanner, positioned in the path of the collimated beam between the expander and the focusing device for redirecting the collimated beam toward the focusing device to scan the beam waist across the target material at successive scan positions; and a controller controlling adjustment of the distance between the diverging lens and the converging lens based on the current scan position so that the beam waist is scanned substantially in a plane for all of the successive scan positions. Each one of the successive scan positions may be associated with a respective pre-selected length, and the controller may adjust the distance to the pre-selected length that is associated with the current scan position. The controller may be in communication with the expander and the scanner to synchronize the adjustment of the distance with scanning of the collimated beam. The multi-photon absorption may be two-photon absorption. The light source may emit a pulsed beam of light, with a peak power of higher than 310 kW and an average power of from about 50 mW to about 4 W. The average power may be larger than 2.5 W. The system may comprise a support for supporting the target material. The support may be adjustable to move the target material relative to the objective lens and to position the target material adjacent the objective lens so that the target material intersects the plane. The system may comprise an isolator positioned adjacent the light source, for isolating the light source from reflected light. The system comprise a shutter positioned downstream of the isolator for selectively transmitting the beam of light. The light source may be a laser source, and the wavelength may be in the range from about 700 to about 1020 nm. The dry objective lens may have a numerical aperture of about 0.4 to about 0.9. The focusing device may be a microscope. The scanner may be a galvanometer scanner. The plane may be perpendicular to the optical axis of the dry objective lens.

In accordance with another aspect of the present invention, there is provided a method of multi-photon stereolithography, comprising generating a beam of light having a wavelength selected to induce multi-photon absorption in a target material; expanding the beam through an optical expander comprising a diverging lens and a converging lens, to produce a collimated beam of the light, a divergence of the collimated beam being dependent on a distance between the diverging lens and the converging lens; focusing the collimated beam onto the target material through a focusing device comprising a dry objective lens, to induce the multi-photon absorption in the target material at a beam waist of the focused beam; redirecting the collimated beam toward the focusing device to scan the focused beam across the target material at successive scan positions; adjusting the distance between the diverging lens and the converging lens based on the current scan position so that the beam waist is scanned substantially in a plane at all of the successive scan positions. Each one of the successive scan positions may be associated with a respective pre-selected length, and the distance may be adjusted to the pre-selected length that is associated with the current scan position. Redirection of the beam and adjustment of the distance may be synchronized. The beam of light may be generated with a laser source, which may be isolated from reflected laser light The target material may be moved relative to the objective lens to relocate the target material relative to the objective lens. The multi-photon absorption may be two-photon absorption. The wavelength of the light may be in the range from about 700 to about 1020 nm. The dry objective lens may have a numerical aperture of about 0.4 to about 0.9. The beam of light may be a pulsed beam, with a peak power of higher than 310 kW and an average power of from about 50 mW to about 4 W. The average power may be larger than 2.5 W. The focusing device may be a microscope. The collimated beam may be scanned with a galvanometer scanner.

In accordance with another aspect of the present invention, there is provided an optical system for focusing a beam of light. The system comprises a collimator for adjusting a divergence of the beam of light to produce a collimated beam, the collimator comprising a diverging lens and a converging lens, the divergence of the collimated beam being dependent on a distance between the diverging lens and the converging lens; a scanner for directing the collimated beam onto a focusing device to focus the beam to a focal point and to scan the focused beam to successive scan positions; and a controller for controlling the distance between the lenses to adjust the divergence of the collimated beam based on the current scan position so that the focal point is scanned substantially in a focal plane at all of the successive scan positions.

Other aspects and features of the present invention will become apparent to those of ordinary skill in the art upon review of the following description of specific embodiments of the invention in conjunction with the accompanying figures.

BRIEF DESCRIPTION OF THE DRAWINGS

In the figures, which illustrate, by way of example only, embodiments of the present invention,

FIG. 1 is a schematic diagram of a two-photon stereolithography apparatus, exemplary of an embodiment of the present invention;

FIG. 2 is a schematic side view of the objective lens, target and support shown in FIG. 1;

FIG. 3 is a scanning electron microscopy (SEM) image of a top view of a first article fabricated by two-photon polymerization using the apparatus of FIG. 1;

FIG. 4 is an SEM image of a perspective view of the article of FIG. 3 in a different state;

FIG. 5 is an SEM image of a perspective view of a second article having an array of unit devices, fabricated by two-photon polymerization using the apparatus of FIG. 1; and

FIG. 6 is an SEM image of a top plan view of a unit device on the article shown in FIG. 5.

DETAILED DESCRIPTION

In exemplary embodiments of the present invention, a dry objective lens is used in multi-photon stereolithography, instead of an immersion objective lens. With a dry objective lens, higher product throughput can be conveniently achieved. As there is no need to use an immersion liquid such as immersion oil, the risk of contaminating the target material is reduced. A mechanism is provided to keep the axial distance from the beam waist of the focused beam to the objective lens constant or substantially constant while the focused beam is scanned across the target at successive scan positions. In other words, the beam waist (or focal point) of the focused beam is scanned substantially in a plane (or focal plane) at all successive scan positions. As the focal plane distortion is reduced or corrected by this mechanism, the quality of a product formed using a dry objective lens can be improved.

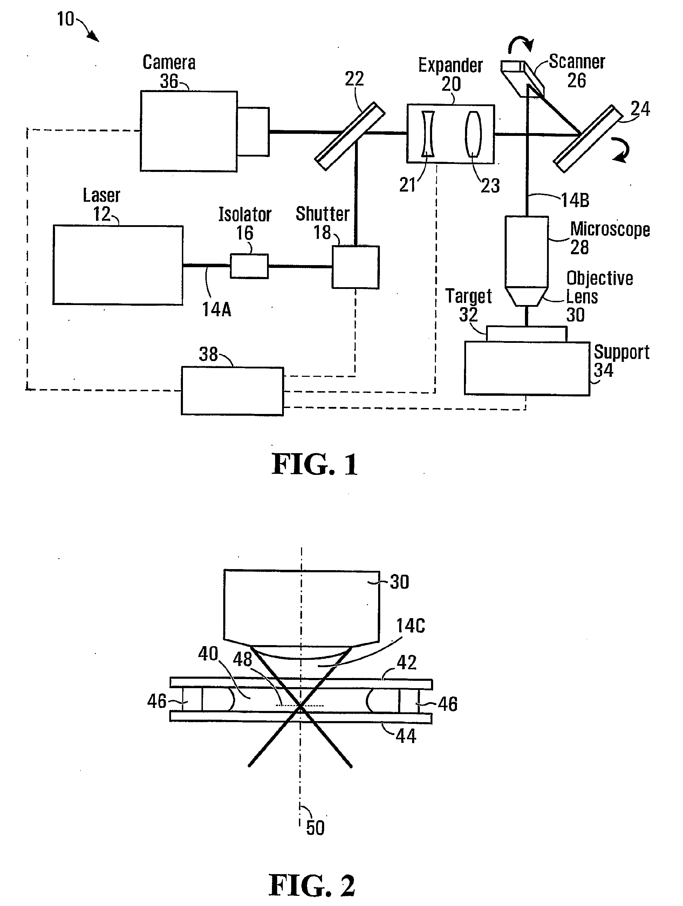

FIG. 1 is a schematic diagram illustrating a system 10 for multi-photon stereolithography, exemplary of an embodiment of the present invention.

System **10** includes a light source for emitting a beam of photons, such as laser source **12**. In this embodiment, laser source **12** is a pulsed tunable near-infrared laser, such as a Ti-sapphire laser. A commercially available laser source, such as the Spectra Physics Mai Tai™ broadband Ti-saphire laser may be used. The pulse rate may be of the order of femtosecond. Other suitable lasers may be used in other embodiments.

Laser source **12** is used to produce a beam **14A** of laser light. The wavelength of the laser light (photons) is selected to induce multi-photon, such as two-photon, absorption in the particular target material. For example, if a single-photon absorption wavelength for the particular material is $L_1$, the wavelength for two-photon absorption may be $2L_1$. In order to work with different materials, laser source **12** can be tuned in wavelength within a given range. For example, to use two-photon absorption to activate UV polymerization in a material where the required absorption energy quantum is about 355 nm, the spectrum of the light may have a peak at about 710 nm.

In this embodiment, the laser wavelength is tunable between about 700 to about 1020 nm. The output beam diameter from laser source **12** is less than 2 mm with a focusing diameter of $1/e^2$. The full far field divergence angle of the beam is less than about 1 mrad. In the pulsed mode, the average output power of laser source **12** is larger than 2.5 W, and the peak power is larger than 310 kW. In different embodiments, the average laser output power may be from about 50 mW to about 4 W. A higher laser power may be used with a dry objective lens and may be desirable as it can provide higher scanning speed and throughput. In the present embodiment, the pulse repetition rate may be about 80 MHz, and the pulse width may be about 100 fs.

In another embodiment, beam **14A** emitted from laser source **12** may have a beam width less than about 1.2 mm with a focusing diameter of $1/e^2$. In some embodiments, a smaller beam diameter may be advantageous as it can provide a higher resolution.

An isolator **16** is positioned adjacent to laser source **12** in the path of the beam **14A** to isolate laser source **12** from reflected laser light. That is, isolator **16** is configured and positioned to prevent reflected laser light to re-enter laser source **12,** as reflected light may disrupt the mode locking operation of the laser. In this embodiment, isolator **16** is a broadband isolator. For example, a 10-5-NIR-HP™ isolator from Optics For Research™ (OFR) may be used. In other embodiments, other suitable laser light isolator may be used.

A shutter **18** is positioned downstream of isolator **16** for selectively transmitting beam **14A** therethrough. Shutter **18** is an Acousto-Optic Modulator (AOM) in this embodiment, which provides fast-shutter operation. For example, an AA MOD 110 shutter from AA Opto-Electronic™ may be used.

In other embodiments, shutter **18** may be placed elsewhere, such as further downstream, and may be any other suitable high-speed shutter for the specific application. For example, the shutter speed may be on the order of about 100 MHz.

An optical beam expander **20** is positioned downstream of shutter **18,** and is configured to expand beam **14A** and produce a collimated beam **14B** with an increased beam width (beams **14A** and **14B** as well as **14C** whown in **FIG. 2** are also collectively referred to as beam **14)**. As used herein, a collimated beam refers to a beam that has a low divergence. For example, in some embodiments, the divergence of the collimated beam **14B** may be less than about 7.6 mrad. As can be appreciated, a perfectly collimated beam of light (with divergence of zero) is difficult or impossible to obtain in practice. Further, the divergence of the collimated beam **14B** is varied during use and may deviate from the lowest divergence achievable for a given optical setup.

A dichroic mirror **22** may be provided to reflect beam **14A** into expander **20**.

Expander **20** includes an expansion lens **21** for expanding the beam diameter to a large enough size so that the beam diameter is larger than the input aperture (not separately shown) of the focusing device such as microscope **28,** so that the back of the objective lens **30** (see below) is overfilled to make full use of the objective aperture. Expansion lens **21** is a diverging lens, also referred to as a negative, concave or dispersing lens. For expansion lens **21,** the lens surfaces may be plano-concave, double (bi) concave or concavo-convex.

Expander **20** also includes an expander objective lens **23** positioned downstream of expansion lens **21**. Expander objective lens **23** is a converging lens, also referred to as a positive, convex lens. The lens surfaces of a converging lens may be piano-convex, bi-convex or meniscus. The beam size of beam **14** can be increased after passing through expander **20.**

Expander **20** is electronically controlled to expand and collimate beam **14**. Expander **20** increases the beam diameter to a desired size and is also configured to automatically adjust the divergence (collimation) of beam **14B** for correcting focal plane distortion, which is mainly due to field curvature effect, as will be further explained below.

In this embodiment, expansion lens **21** is axially moved/adjusted by a motorized translator (not separately shown) to vary or adjust the distance between expansion lens **21** and expander objective lens **23**. The distance adjustment is automated. As such, beam expander **20** also acts as an on-the-fly focusing module to automatically correct for any focal plane distortion, which may occur such as when large lens elements that do not correct for plane distortion are used. The physical distance between expansion lens **21** and expander objective lens **23** may be increased or decreased from a balanced distance, such as 90 mm, to change the beam size/diameter, or to reduce plane distortion. For example, one of the lenses **21** and **23** may be repositionable. The movement of the movable lens may be driven by a motor.

Distance adjustment may also be made by changing the optical distance between the two lenses without changing the physical distance therebetween in a different embodiment.

In one embodiment, the diameter of the collimated beam **14B** may be about 10 mm, and the distance between lenses **21** and **23** (thus divergence of beam **14B**) may be adjusted so that the diameter of beam **14B** may be varied to a few mm above or below 10 mm at the input aperture of microscope **28.**

In system **10,** expander **20** includes a varioSCAN 20™, provided by Scanlab AG™. This device may be controlled using an RTC™ control board and control software provided by the same company. Details of construction and operation of varioSCAN 20™ can be obtained from Scanlab, such as from its website: www.scanlab.de/. In other embodiments, varioSCAN 20™ may be replaced with another suitable expander and dynamic focusing device.

A mirror **24** is placed downstream of expander **20** to direct expanded collimated beam **14B** into a scanner **26.**

Scanner **26** re-directs beam **14B** to scan beam **14B** over a desired target region. A galvanometer scanner may be used as scanner **26.** For example, the scanner may be a ScanCube7™ scanner provided by Scanlab. In a typical galvanometer scanner, two scan mirrors (not separately shown) may be provided, each driven by a galvanometer. Each scan mirror is independently adjusted (turned) to redirect the beam in one dimension. Thus, the two scan mirrors in combination can scan the beam across a two-dimensional plane.

A focusing device, such as a microscope **28,** is placed downstream of scanner **26.** Except the features expressly described herein, microscope **28** is otherwise a conventional microscope and can be constructed using conventional technology. Microscope **28** is positioned and configured to focus beam **14B** onto a focal plane in a focus region of a target material.

Microscope **28** has a dry objective lens **30.** A dry objective lens does not need to be immersed in oil or water to function properly. A dry objective lens can properly function when it is immersed in air or another gas environment. In this embodiment, a Nikon™ ELWD air objective is used. In other embodiments, other types of dry objectives may be used. Suitable Nikon ELWD air objectives include objectives that have magnification factors of 20x to 100x, such as 20x, 50x, and 100x. The numerical apertures (NA) of these objective lenses are 0.4, 0.55, and 0.8, respectively. The 3-D resolution of these objective lens are respectively 1x1x7, 0.5x0.5x1, and 0.1x0.1x1, respectively (all in micron). The NA in dry objective lens **30** may vary from about 0.4 to about 0.9.

Objective lens **30** focuses beam **14B** onto a focal point (focus region) in target **32.** Target **32** is supported by a support **34,** which includes an adjustment mechanism, such as a high-resolution stage or a galvanometer.

Support **34** may move and adjust the position of target **32** in three (3) dimensions. Support **34** may be motorized for moving the target. Support **34** can move target **32** at least along the axial direction of beam **14.** Optionally, support **34** may be configured to also move target **32** in transversal directions. In some embodiments, support may be configured to provide both translational and rotational movement of target **32.**

A camera **36** such as a CCD (charge-coupled device) camera is provided for taking images of the processed target and monitoring the operation of apparatus **10.** Camera **36** may be positioned to receive light from mirror **22.**

A controller **38** may be provided for controlling the operation of apparatus **10.** Controller **38** is in communication with expander **20** for controlling the automatic adjustment of the distance between expansion lens **21** and expander objective lens **23** to reduce distortion (curvature) of the focal plane of microscope **28.** Controller **38** may also be in communication with one or more of laser source **12,** shutter **18,** scanner **26,** support **34,** and camera **36,** to receive input therefrom, and may optionally control the operation thereof. The distance adjustment may be controlled based, at least in part, on the position or location of the current beam waist, or on the position/angles of the scan mirrors in the scanner which determines the direction of the beam axis. For each given beam direction, a length value may be stored in a memory in association with the beam direction or the expected coordinates of the location of the beam waist. The distance between lenses **21** and **23** is set to the corresponding length associated with that location when the beam is scanned toward that location. In this regard, controller **38** may be in communication with both expander **20** and scanner **26** to synchronize the movement of the motorized lens in expander **20** and the scan mirrors in scanner **26.**

Controller **38** may include an electronic control circuit. For example, it may include a computer or other computing devices and may also include a program module for controlling the operation of apparatus **10.** The program module may include a modified SCAPS program. This program can synchronize the motion of a support stage and the beam scanning and can perform slide by slide scanning.

Controller **38** may be an integrated device or be provided as multiple separated units.

In this embodiment, system **10** has a scan speed of up to 30 mm/s and a scan height of up to 30 mm. The scan speed and scan height may be higher in other embodiments depending on the components used.

**FIG. 2** schematically shows objective lens **30** and target **32,** in more detail. In this embodiment, target **32** includes a target material **40** sandwiched between a top plate **42** and a bottom plate (or substrate) **44.** Top plate **42** and bottom plate **44** are spaced apart by spacers **46.**

Target material **40** is a material that is to be processed by two-photon lithography. For example, the target material may be an acrylic based monomer mixed with a photo initiator so that crosslinking of the monomers can be activated by photon excitation.

For example, a suitable target material may contain a selective combination of the following commercially available materials:

- ethoxylated bisphenol A dimethacrylate (SR-348, Sartomer™);

- ethoxylated bisphenol A diacrylate (SR-349, Sartomer);

- ethoxylated 1,1,1-trimethylopropane triacrylate (SR-9035, Sartomer);

- UV photoinitiator such as $Ph\text{-}CO\text{-}C(CH_3)_2OH$ (DAR-1173™);

- free-radical photoinitiator such as 2,2-dimethoxy-2-phenylacetophenone (Irgacure 651, Ciba Geigy™, referred to as IRG herein)

- aliphatic urethane acrylate (EB-270, UCB Chemicals™);

- silicone-type surfactant (DC190, Dow Corning™);

- urethane acrylate (NR-2720, Zeneca Resins™).

The photocurable compositions disclosed in US Patent No. 6,025,114 may also be used as the target material.

In some embodiments of the present invention, compositions containing the mixtures listed in **Tables I** and II may be used as the target material, where concentrations of the ingredients are given in weight percentages (wt%).

As illustrated in **FIG. 2,** at the focal point of the focused beam **14C,** the beam radius/diameter or width of beam **14C** is at the minimum (referred to as the beam's spot size). This portion of beam **14C** is referred to as its beam waist. In an embodiment of the present invention, when the incident angle of beam **14B** at microscope **28** is varied by scanner **26,** the focal point or beam waist of focused beam **14C** also moves within or close to a focal plane **48,** which is perpendicular to the optical axis **50** of objective lens **30,** due to automatic correction of the focal plane distortion provided by the dynamic adjustment of the distance between lenses **21** and **23.**

Without proper correction of focal plane distortion, the beam waist of the focused beam **14C** would move away or be displaced from focal plane **48** when the direction of beam **14** is scanned away from axis **50,** due to the effect of field curvature and other reasons such as lens imperfection and misalignment of optical components or the like. The displacement of the beam waist (focal point) from the focal plane **48** is referred to as focal plane distortion. Typically, the farther away the beam direction from axis **50,** the larger the displacement.

Thus, in an embodiment of the present invention, the distance between lenses **21** and **23** is dynamically adjusted to offset the field curvature effect and other effects and to keep the beam waist remain substantially within, i.e. at least sufficiently close to, focal plane **48,** as will be further described below.

**Table I.** Mixtures for two-photon lithography

| Mixture | SR-349 (wt%) | SR-348 (wt%) | NR-2720 (wt%) | SR-9035 (wt%) | DAR-1173 (wt%) | DC190 (wt%) | IRG (wt%) |
|---|---|---|---|---|---|---|---|
| 1 | 8.0 | 42.0 | 34.5 | 10.0 | 5.5 | - | - |
| 2 | - | 45.0 | 34.5 | 15.0 | 5.5 | - | - |
| 3 | 8.0 | 42.0 | 34.5 | 10.0 | 5.5 | 0.2 | - |
| 4 | - | 45.0 | 34.5 | 15.0 | 5.5 | 0.2 | - |
| 5 | 20.0 | 35.0 | 29.0 | 10.5 | 5.5 | - | - |
| 6 | 20.5 | 35.9 | 29.8 | 10.8 | 5.5 | - | 3.0 |

**Table II.** Mixtures for two-photon lithography

| Mixture | SR-349 (wt%) | SR-348 (wt%) | NR-2720 (wt%) | SR-9035 (wt%) | DAR-1173 (wt%) | IRG (wt%) | EB-270 (wt%) |
|---|---|---|---|---|---|---|---|
| 7 | 15.0 | 46.0 | 24.0 | 9.5 | 5.5 | - | - |

(continued)

| Mixture | SR-349 (wt%) | SR-348 (wt%) | NR-2720 (wt%) | SR-9035 (wt%) | DAR-1173 (wt%) | IRG (wt%) | EB-270 (wt%) |
|---|---|---|---|---|---|---|---|
| 8 | 10.0 | 40.0 | 25.0 | 19.5 | 5.5 | - | - |
| 9 | 19.0 | 44.0 | 21.0 | 11.0 | 5.0 | - | - |
| 10 | 4.5 | 40.0 | 40.0 | 10.0 | 5.5 | - | - |
| 11 | - | 42.0 | 42.0 | 10.5 | 5.5 | - | - |
| 12 | - | 49.9 | 30.2 | 14.4 | 5.6 | - | - |
| 13 | - | 45.5 | 34.5 | 15.0 | 5.0 | - | - |
| 14 | 55.0 | - | 29.0 | 10.5 | 5.5 | - | - |
| 15 | 55.0 | - | 29.0 | 10.5 | - | 5.5 | - |
| 16 | 56.6 | - | 29.8 | 10.8 | - | 2.8 | - |
| 17 | 20.5 | 35.9 | 29.8 | 10.8 | - | 3.0 | - |
| 18 | 10.9 | 36.6 | - | 12.5 | 5.5 | - | 34.5 |
| 19 | - | 50.0 | - | 19.5 | 5.5 | - | 25.0 |

In use, system **10** may be operated as follows.

A beam of laser **14** is produced by laser source **12**. The beam has a sufficiently high peak and average power, such as larger than 310 kW and 2.5 W respectively. Beam **14** has no wavelength that will cause single photon photo-chemical reaction in the target material **40,** and includes a wavelength that is suitable for triggering or inducing two-photon photochemical reaction in target material **40**. Thus, the spectrum of beam **14** may be a narrow band centered at a desired wavelength or may have a single wavelength. The central wavelength may be in the range of about 700 to about 1020 nm depending on the target material and the reactions that are to be photo-initiated.

Beam **14A** passes through isolator **16** and then shutter **18**. Isolator **16** prevents any reflected light from getting into laser source **12,** and can thus prolong the lifetime of laser source **12**. Shutter **18** is controlled by controller **38** to selectively stop passage of beam **14** therethrough. The maximum shutter speed may be below 110 MHz in some applications.

Beam **14A** is directed by mirror **22** to expander **20**. Expander **20** produces an expanded and collimated beam **14B**. The beam width of beam **14B** is larger than the beam width of beam **14A,** for example, by about 4 to about 10 times. The beam width of beam **14B** may be selected to balance a number of factors and considerations. For example, higher expansion may be advantageous for reducing the moving distance of motorized lens in expander **20**. On the other hand, a larger expansion may result in a larger power loss, such as when the beam width is wider than the diameter of the input aperture in microscope **28**. Beam **14** passes through, in order, expansion lens **21** and focusing lens **23**.

The expanded beam **14B** is directed to scanner **26** by mirror **24**.

Scanner **26** re-directs and scans beam **14B** onto target **32** through microscope **28** and objective lens **30**. Beam **14B** is focused by objective lens **30** onto a confined volume, the focus region, in target material **40** which is held in position by plates **42** and **44** and support **34**. Dry objective lens **30** is not immersed in any liquid during use but is exposed to air (or another gas).

The objective lens **30** focuses expanded and collimated beam **14B** into a focus region in the target material **40**. When large optical elements are used, the beam waist of focused beam **14C** can significantly deviate from the focal plane **48** of objective lens **30**. That is, the focal plane distortion at off-axis locations can be significant so as to substantially affect the shape of the product formed. Ideally, beam **14** should be focused onto focal plane **48** regardless of whether its path is near or away from optical axis **50** of objective lens **30**. In practice, it may be acceptable that the beam waist is kept sufficiently close to a plane **48** (i.e. substantially in the plane) as beam **14** is scanned.

Thus, to improve production quality, focal plane distortion may need to be reduced or eliminated. Without such correction, the focus region would need to be sufficiently small and the resolution of the objective lens would need to be sufficiently high to ensure quality production. With the automatic, real-time reduction or correction of focal plane distortion as described herein, an objective lens with a relatively low resolution, such as a dry objection lens, can be used for multi-photon stereolithography.

In an exemplary embodiment of the present invention, potential focal plane distortion is reduced or corrected by dynamically adjusting the distance between the expansion lens **21** and the focusing lens **23** in expander **20**. This adjustment is automatically controlled by controller **38.** The divergence of collimated beam **14B** produced by expander **20** is dependent on the distance between lenses **21** and **23.** The divergence of collimated bean **14B** can thus be varied by adjusting this distance. The divergence of collimated beam **14B** in turn affects the focal distance of the focal point, or the axial distance of the beam waist, from objective lens **30.** Thus, by adjusting the distance between lenses **21** and **23** the focal distance can be varied to offset the effect of field curvature, and any other effects that cause focal plane distortion, so that the beam wais of focused beam **14C** (or focal point) remains substantially in the focal plane **48** as beam **14C** is scanned to successive scan positions. Generally, when beam **14** is scanned to a scan position where the beam waist is away from optical axis **50** of objective lens **30,** the focal distance will need to be increased by a suitable amount to offset the effect of field curvature and to keep the beam waist remain substantially in focal plane **48.** The focal distance can be increased by increasing the divergence of the incident beam, collimated beam **14B.**

The amount of increase of the divergence for a given location, and thus the required length of distance between lenses **21** and 23, can be initially estimated by calculation based on optics theory for the particular optical setup. The calculated lengths can be further fine tuned or verified by calibration. For example, the calibration may be carried out by visually inspecting an article produced using system **10,** such as with an SEM imaging technique. When the distance is adjusted correctly during beam scanning, the produced article should have a shape closely resembling the input drawing. If the shape of the produced article is deformed in regions away from axis **50,** the distance data will need to be further modified. The selected length values for different scan positions may be stored, such as in a memory (not separately shown) in controller **38,** in association with the respective scan positions for later retrieval and use. The memory may also be separate from, but in communication with, controller **38,** so that controller **38** can access the stored distance data during operation. In either case, controller **38** can control the adjustment of the distance in synchronization with the movement of scanner **26** based on the stored distance data and the current scan position.

For example, the distance data and the associated scan positions may be stored in a table format. The distance data may be presented as absolute length values or as differences from an initial distance. For instance, the initial distance may be a distance for producing an optimally collimated beam. The scan position may be defined or represented/expressed in different manners. For example, in some embodiments, the scan position may be defined by the scanner mirror positions. In other embodiments, the scan position may be defined by the direction of beam **14B** such as relative to the optical axis of microscope **28** or objective lens **30.** The scan positions may also be defined by the two-dimensional coordinates of the intercept of the beam axis and the focal plane **48.** For example, if the direction of optical axis **50** is defined as the z-axis, the x-y coordinates of the intercept may be used to define the scan position of beam **14.**

In one embodiment, to produce a 3D structure in a target material, a 3D drawing of the structure to be produced is broken down into component slices, lines and dots. The target material is first fixed in position to form a slice of the structure by scanning beam **14** using scanner **26** according to the input slice image and by synchronized adjustment of the distance between lenses 21 and 23 to maintain the beam waist within a plane that overlaps the desired slice during scanning. The target material is then repositioned to form the next slice of structure. This process can continue until the entire 3D structure is formed.

In one embodiment, the wavelength of beam **14** may be about 740 nm. The dry objective lens **30** may have a magnification factor of 20 and the microscope **28** may have a field of view of 400 $\mu$m by 400 $\mu$m. The spot size of the beam waist at the focal point may be about 2 $\mu$m or less. The depth of focus may be about 10 $\mu$m.

Target material **40** may be any suitable material selected for the particular application, as discussed herein.

Support **34** is controlled by controller **38** or another controller (not shown) to adjust the position of target **32** as appropriate. The positions may be adjusted based on user input or automatically according to a pre-programmed procedure and based on dynamic input received by controller **38.**

The process can be monitored in real-time with camera **36.** The images captured by camera 36 may be communicated to controller **38** for processing or analysis and may be used as input for controlling other components in the system.

The speed of beam scan across target **32** can be as high as 30 mm/s.

The scan height (along axial direction of the beam) can be as high as 30 mm.

The scan resolution of system **10** can be varied using different objective lenses and can be as high as 0.1x0.1x0.1 (in micron) with 100x magnification.

When beam **14** with a sufficient power (beam intensity) and suitable wavelength or spectrum is focused into the focus region of target material **40,** two-photon absorption occurs with a high frequency and photochemical reactions such as photo-induced polymerization will proceed with a sufficiently high rate.

For instance, in a typical two-photon polymerization process, near-infrared (NIR) light with high peak power is focused on a photopolymer. The photopolymer includes photo-initiators that can form a radical when a single UV photon is absorbed and the absorbed photon energy excites an electron to initiate photo-chemical reaction. The resulting radical will cleave the double bonds of the unsaturated carbon bonds in the acryl groups of the monomers and oligomers, successively creating new radicals. This chain reaction is terminated when two chain radicals meet and react with each other. The same initiator can simultaneously absorb two coherent NIR photons and form the radical, as the combined photon energy from the two photons can also excite the electron to initiate the same photo-chemical reaction. The probability of two-photon absorption can be approximated by the following equation,

$$n_a \propto \frac{\delta_2 P_{ave}^2}{\tau_p f_p^2} \left(\frac{NA^2}{2\eta c\lambda}\right)^2 , \qquad\qquad \text{Equation (1)}$$

where $n_a$ is the probability that a certain fluorophore in the target material 40 simultaneously absorbs two photons during a single laser pulse, $P_{ave}$ is the time average power of laser beam **14,** $\delta_2$ is the molecular cross-section of the fluorophore molecules in the target material **40,** $\tau_p$ is the duration of each laser pulse, $f_p$ is the repetition rate of the laser, $\eta = \dfrac{h}{2\pi}$ being the Plank constant), $\lambda$ is the excitation wavelength (or the single-photon absorption wavelength), c is the speed of light, and $NA$ is the numerical aperture of objective lens 30.

As can be determined from the above equation, a consequence of two-photon absorption initiated photochemical reaction is that sufficient photo-chemical reaction can occur within a confined region, the focus region around the beam waist, to cause structural change within the focus region, but not outside the focus region because the probability of two-photon absorption outside the focus region is too low to cause significant structural change. The focus region in two-photon absorption is axially confined. That is, the focus region only extends along a small portion of the axis of the objective lens. Practically speaking, the probability of two-photon absorption/excitation falls off as the fourth power of the distance from the focal point of the objective lens, as the laser intensity itself has a quadratic dependence on axial distance. Typically, the volume of the focus region in two-photon absorption can be less than $10^{-12}$ cm$^3$. In contrast, the probability of single-photon absorption remains more stable over a large portion of the axis of the objective lens, as it is only a function of the laser intensity which is in turn linearly dependent on axial distance.

As a result of the two-photon absorption/excitation initiated photochemical reactions, a desired structural change will occur within the focus region of target material **40**. The structural change can include chemical structural change, physical structural change, or both. The structural change can be visible or invisible to human eye. Because two-photon absorption only occurs with high probability in the focus region, no significant structural change will occur outside the focus region. By controlling the incidence direction of beam **14B** relative to the target material **40,** and thus the focus region in target material **40,** 3-D structures can be produced. This process may be controlled by controller **38**.

The axial movement of the focus region within target material **40** is accomplished by axially moving support **34** along the axial direction of the optical axis **50** of objective lens **30**. The transversal movement of the focus region within target material **40** is accomplished by re-directing beam **14B** using scanner **26** to scan the beam to successive scan positions. Additional transversal movement may be achieved by translational or rotational movement of support **34** in the plane transversal to the optical axis **50** of objective lens **30**. In different embodiments, these movements may be effected differently. For example, axial movement may be effected by changing the focal plane of the beam, such as by adjusting or moving one or more optical focusing elements (e.g. microscope **28).**

As now can be appreciated, system **10** can conveniently provide certain benefits. As no immersion liquid such as oil is needed to immerse the objective lens, the chance for contamination of focusing elements and the target material is reduced or minimized. As plane distortion is corrected dynamically, larger optical elements can be used thus increasing the sizes of devices that can be fabricated using system **10**. The operation of system **10** is more flexible and easier as compared to some conventional devices. The scan speed and scan height are relative high in system **10,** as compared to conventional two-photon lithography techniques where the objective lens are immersed in oil or water. The scan height in these conventional techniques is limited by the size of the oil droplets and the focal diameter of the objective lens and is typically less than about 1 mm. In system **10,** the requirements for objective lens **30** are not as strict as for oil immersed objective lenses used in the conventional techniques. Thus, a wider selection of objective lenses may be used in system **10.** When an AOM is used as the shutter, the shutter speed is faster. As expander **20** can provide automatic slice planarity control, relatively high magnification and resolution can be achieved without an oil immersion objective lens in two-photon lithography applications.

In addition, system **10** may be provided with laser focus wobble function, device stitching function, and device arraying. These functions make it possible to produce larger target devices by moving the support stage in the transversal directions.

System **10** can provide relatively high production throughput as compared to oil or water immersion based two-photon techniques.

System **10** may be modified while still retaining one or more of the benefits described herein. For example, laser beam properties may be varied in different embodiments and for different applications; and some components or devices may be located at an alternative position and still serve the same functional purposes. For instance, in different embodiments, camera **36** may be placed elsewhere and may receive reflected light from another point in the optical path of beam **14.** Isolator **16** may be integrated with laser source **12.** Shutter **18** may also be integrated with another optical component, such as laser source **12** or expander **20,** or placed downstream of expander **20.** Expander **20** may be provided as an integral unit or as an assembly of multiple units. Other suitable expander devices such as other suitable devices provide by Scanlab AG may be used as expander **20.** Different optical path of beam **14** may be selected, using more or less mirrors and by placing mirrors or other deflecting or reflecting elements at different locations in the beam path. In different embodiments, the objective lens of the microscope may face different directions. As the objective lens is not immersed in a liquid such oil, the optical axis of the objective lens may be substantially aligned with the vertical direction, or a horizontal direction, or any other direction.

In a further example, system **10** may be operated in a manner different from the process described above.

In a further example, system **10** may be modified for multi-photon applications where photochemical reaction in the target material is trigged by simultaneous absorption of three or more photons. The possible changes will include selecting a suitable laser source where the sum of the energy carried by three or more photons is appropriate for exciting one electron in the target material.

Laser source **12** may also be replaced with another type of light source which can provide a beam of photons of suitable properties.

In different embodiments, any optical element of system **10,** such as a lens, may be implemented in different manners. For example, each lens may be provided as a single lens, a compound lens, or a group of lenses integrated or combined to provide the desired function.

Additional optical elements, which may direct, focus or otherwise modify the beam properties or travel direction, may be placed in or along the beam path to perform a function desired for a given application. The additional optical elements may be placed at any suitable point of the beam path, and may be integrated with an element already shown in **FIG. 1.** For example, additional optical elements or features may be provided to improve the performance of the system, including aberration reduction or correction, where the aberration may be spherical, coma, or chromatic, or the like.

When reference is made to a plane such as a focal plane, it should be understood that in practical application, slight displacement of the beam waist from the focal plane at certain locations may be inevitable and may be permissible. For example, if the slight displacement does not result in unacceptable structural defects in the finished product, it may be tolerable. As can be understood, for practical purposes when the beam waist is sufficiently close to the focal plane, the structure formed by multi-photon absorption induced polymerization may be substantially the same as, or even indistinguishable from, a structure produced with the beam waist strictly moved within the focal plane, due to the depth of focus for the particular optical setup. Thus, it should be understood that it is not necessary that the distance data be selected to restrict the movement of the beam waist to within a geometrical plane. Further, due to many practical limitations, it may not be possible to select distance data such that the beam waist always remains strictly within a geometrical plane. It therefore should be understood that, when a distance is selected to offset the field curvature effect at a given location to focus the beam at a location within the focal plane, it is sufficient that with the selected distance, the beam is focused such that the beam waist is within a tolerable distance from the ideal focal plane. Therefore, for the purposes of this invention, it should be understood that the locations of the beam waist are considered to be within a plane when they are generally within a plane or when they are sufficiently close to a plane so that their displacement from the plane has no material effect on the finished product.

An embodiment of the present invention such as system 10 may have various applications in many different fields. For instance, system 10 may be used for fabrication of 3D nanometer-scale (> 100 nm) devices, and may be used in semiconductor industry (e.g. as direct-write lithography machine, for producing phase mask, for direct fabrication of optical components onto IC (integrated circuit) devices, for fabrication of sensors); in photonics (e.g. for processing photonic crystals and other optical structures, and quantum electronics); in wireless industry (e.g. for fabrication of resonators, waveguides, all-optics micro-transceiver devices); for fabrication of 3D nanometer-scale microelectromechanical system (MEMS) and nanoelectromechanical system (NEMS) devices; in rapid prototyping industry (e.g. for use in rapid prototyping systems and devices); in tissue engineering (e.g. for fabrication of tissue scaffold, for organ regeneration); in chemical and pharmaceutical industries (e.g. fabrication of substrates for the synthesis of chiral compounds), and the like.

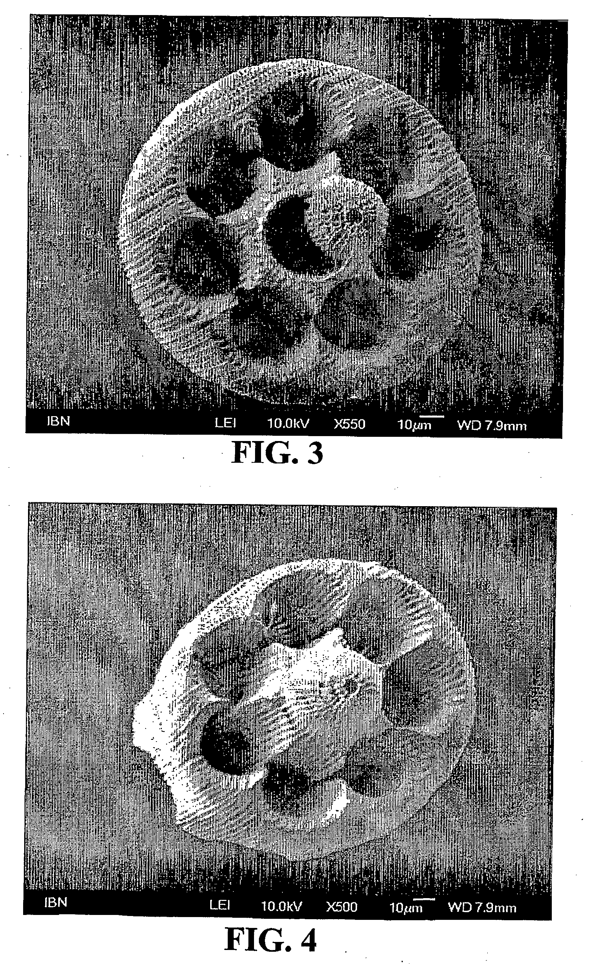

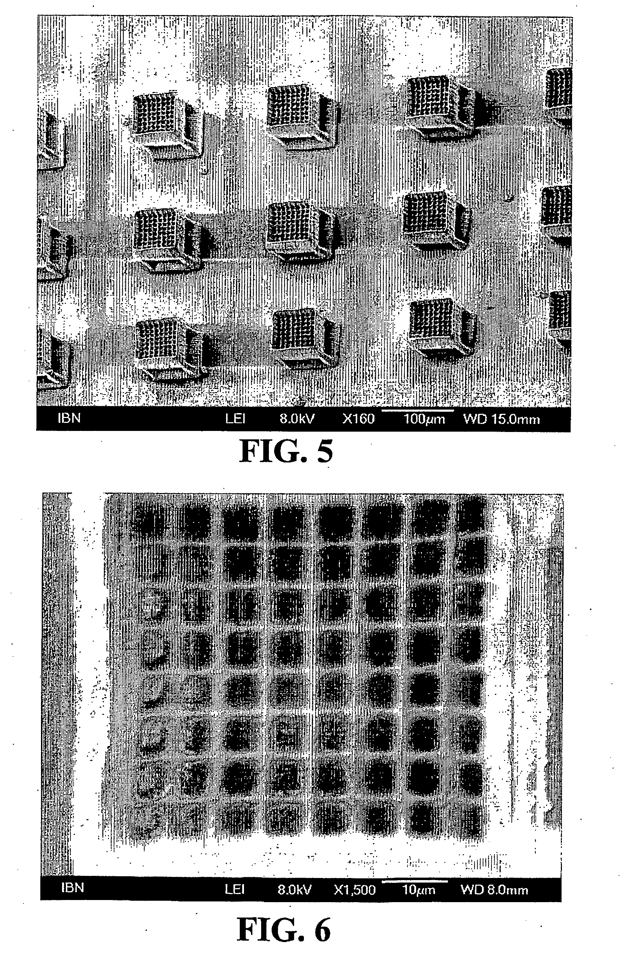

Example products were fabricated by two-photon lithography using a test system as described above. Images of two of the fabricated products are shown in **FIGS. 3, 4, 5** and **6**. For producing these sample products, the laser source generated a laser light of a wavelength of about 710 nm, with an average laser power of about 1 W. The scan speed was 10 mm/s.

As can be understood, the embodiments of the present invention may have applications in a broader field of optical application. For example, in an optical system for focusing a beam of light, a collimator may be provided for adjusting a divergence of the beam to produce a collimated beam. A scanner may be provided for directing the collimated beam onto a focusing device to focus the beam to a focal point and to scan the focal point in a focal plane. A controller may be provided for controlling the collimator to adjust the divergence of the collimated beam based on a location of the focal point in the focal plane. The divergence is adjusted so that the focal point remains substantially in the focal plane as the collimated beam is scanned. Such a system may be useful for applications other than multi-photon stereolithography.

Other features, benefits and advantages of the embodiments described herein not expressly mentioned above can be understood from this description and the drawings by those skilled in the art.

Of course, the above described embodiments are intended to be illustrative only and in no way limiting. The described embodiments are susceptible to many modifications of form, arrangement of parts, details and order of operation. The invention, rather, is intended to encompass all such modification within its scope, as defined by the claims.

**Claims**

1. A system for multi-photon stereolithography, comprising:

   a light source generating a beam of light having a wavelength selected to induce multi-photon absorption in a target material;
   **characterised by**
   an optical expander comprising a diverging lens and a converging lens, positioned in a path of said beam to expand said beam through said lenses to produce a collimated beam of said light, a divergence of said collimated beam being dependent on a distance between said diverging lens and said converging lens;
   a focusing device comprising a dry objective lens, positioned in a path of said collimated beam to focus said collimated beam onto said target material to induce said multi-photon absorption in said target material at a beam waist of said focused beam;
   a scanner, positioned in said path of said collimated beam between said expander and said focusing device for redirecting said collimated beam toward said focusing device to scan said beam waist across said target material at successive scan positions; and
   a controller controlling adjustment of said distance between said diverging lens and said converging lens based on the current scan position so that said beam waist is scanned substantially in a plane for all of said successive scan positions.

2. The system of claim 1, wherein each one of said successive scan positions is associated with a respective pre-selected length, and said controller adjusts said distance to the pre-selected length that is associated with the current scan position.

3. The system of claim 1 or claim 2, wherein said controller is in communication with said expander and said scanner to synchronize said adjustment of said distance with scanning of said collimated beam.

4. The system of any one of claims 1 to 3, wherein said multi-photon absorption is two-photon absorption.

5. The system of any one of claims 1 to 4, wherein said light source is a laser source, and said wavelength is in the range from about 700 to about 1020 nm.

6. The system of any one of claims 1 to 5, wherein said dry objective lens has a numerical aperture of about 0.4 to about 0.9.

7. The system of any one of claims 1 to 6, wherein said focusing device is a microscope.

8. The system of any one of claims 1 to 7, wherein said scanner is a galvanometer scanner.

9. A method of multi-photon stereolithography, comprising:

   generating a beam of light having a wavelength selected to induce multi-photon absorption in a target material;
   **characterized in**
   expanding said beam through an optical expander comprising a diverging lens and a converging lens, to produce a collimated beam of said light, a divergence of said collimated beam being dependent on a distance between said diverging lens and said converging lens;

focusing said collimated beam onto said target material through a focusing device comprising a dry objective lens, to induce said multi-photon absorption in said target material at a beam waist of said focused beam;

redirecting said collimated beam toward said focusing device to scan said focused beam across said target material at successive scan positions; and

adjusting said distance between said diverging lens and said converging lens based on the current scan position so that said beam waist is scanned substantially in a plane at all of said successive scan positions.

10. The method of claim 9, wherein each one of said successive scan positions is associated with a respective pre-selected length, and said adjusting said distance comprises adjusting said distance to the pre-selected length that is associated with the current scan position.

11. The method of claim 9 or claim 10, wherein said redirecting and said adjusting are synchronized.

12. The method of any one of claims 9 to 11, wherein said multi-photon absorption is two-photon absorption.

13. The method of any one of claims 9 to 12, wherein said wavelength of said light is in the range from about 700 to about 1020 nm.

14. The method of any one of claims 9 to 13, wherein said dry objective lens has a numerical aperture of about 0.4 to about 0.9.

15. An optical system for focusing a beam of light, **characterized in** comprising:

a collimator for adjusting a divergence of said beam of light to produce a collimated beam, said collimator comprising a diverging lens and a converging lens, said divergence of said collimated beam being dependent on a distance between said diverging lens and said converging lens;

a scanner for directing said collimated beam onto a focusing device to focus said beam to a focal point and to scan the focused beam to successive scan positions; and

a controller for controlling said distance between said lenses to adjust said divergence of said collimated beam based on the current scan position so that said focal point is scanned substantially in a focal plane at all of said successive scan positions.

**Patentansprüche**

1. System für die Multiphoton-Stereolithographie, umfassend

eine Lichtquelle, die einen Lichtstrahl erzeugt, der eine Wellenlänge hat, welche zum Induzieren der Multiphotonenabsorption in einem Targetmaterial ausgewählt wird;

**gekennzeichnet durch**

eine optische Erweiterung, die eine Zerstreuungslinse und eine Sammellinse umfasst, angeordnet in einem Pfad des Strahls zum Erweitern des Strahls **durch** die Linsen, um einen kollimierten Lichtstrahl zu erzeugen, wobei eine Divergenz des kollimierten Strahls von einer Distanz zwischen der Zerstreuungslinse und der Sammellinse abhängt;

eine Fokussiervorrichtung, die eine trockene Objektivlinse umfasst, angeordnet in einem Pfad des kollimierten Strahls zum Fokussieren des kollimierten Strahls auf das Targetmaterial, um die Multiphotonenabsorption im Targetmaterial an einer Strahltaille des fokussierten Strahls zu induzieren;

einen Scanner, der im Pfad des kollimierten Strahls zwischen der Erweiterung und der Fokussiervorrichtung angeordnet ist zum Umlenken des kollimierten Strahls zur Fokussiervorrichtung, um die Strahltaille über das Targetmaterial an aufeinanderfolgenden Scanpositionen abzutasten; und

einen Controller, der die Einstellung der Distanz zwischen der Zerstreuungslinse und der Sammellinse auf der Basis der aktuellen Scanposition steuert, so dass die Strahltaille im Wesentlichen in einer Ebene für alle aufeinanderfolgende Scanpositionen abgetastet wird.

2. System nach Anspruch 1, wobei jede der aufeinanderfolgenden Scanpositionen mit einer entsprechenden vorausgewählten Länge verknüpft ist und der Controller die Distanz zur vorausgewählten Länge einstellt, die mit der aktuellen Scanposition verknüpft ist.

3. System nach Anspruch 1 oder 2, wobei der Controller in Kommunikation mit der Erweiterung und dem Scanner zum Synchronisieren der Einstellung der Distanz beim Scannen des kollimierten Strahls steht.

**4.** System nach einem der Ansprüche 1 bis 3, wobei die Multiphotonenabsorption eine Zweiphotonenabsorption ist.

**5.** System nach einem der Ansprüche 1 bis 4, wobei die Lichtquelle eine Laserquelle ist und die Wellenlänge im Bereich von etwa 700 bis etwa 1020 nm liegt.

**6.** System nach einem der Ansprüche 1 bis 5, wobei die Trockenobjektivlinse eine numerische Apertur von etwa 0,4 bis etwa 0,9 hat.

**7.** System nach einem der Ansprüche 1 bis 6, wobei die Fokussiervorrichtung ein Mikroskop ist.

**8.** System nach einem der Ansprüche 1 bis 7, wobei die Scanner ein Galvanometerscanner ist.

**9.** Verfahren der Multiphotonen-Stereolithographie, umfassend:

Erzeugen eines Lichtstrahls, der eine Wellenlänge hat, welche zum Induzieren der Multiphotonenabsorption in einem Targetmaterial ausgewählt wird;
**gekennzeichnet durch**
Erweitern des Strahls **durch** einen optischen Expander, der eine Zerstreuungslinse und eine Sammellinse umfasst, um einen kollimierten Lichtstrahl zu erzeugen, wobei eine Divergenz des kollimierten Strahls von einer Distanz zwischen der Zerstreuungslinse und der Sammellinse abhängt;
Fokussieren des kollimierten Strahls auf das Targetmaterial **durch** eine Fokussiervorrichtung, die eine Trockenobjektivlinse umfasst, um die Multiphotonenabsorption im Targetmaterial bei einer Strahltaille des fokussierten Strahls zu induzieren;
Umlenken des kollimierten Strahls zur Fokussiervorrichtung, um den fokussierten Strahl über das Targetmaterial an aufeinanderfolgenden Scanpositionen rastern zu lassen; und
Einstellen der Distanz zwischen der Zerstreuungslinse und der Sammellinse auf der Basis der aktuellen Scanposition, so dass die Strahltaille im Wesentlichen in einer Ebene an allen aufeinanderfolgenden Scanpositionen abgetastet wird.

**10.** Verfahren nach Anspruch 9, wobei jede der aufeinanderfolgenden Scanpositionen mit einer entsprechenden vorausgewählten Länge verknüpft ist und das Einstellen der Distanz das Einstellen der Distanz zur vorausgewählten Länge umfasst, die mit der aktuellen Scanposition verknüpft ist.

**11.** Verfahren nach Anspruch 9 oder 10, wobei das Umlenken und das Einstellen synchronisiert sind.

**12.** Verfahren nach einem der Ansprüche 9 bis 11, wobei die Multiphotonenabsorption eine Zweiphotonenabsorption ist.

**13.** Verfahren nach einem der Ansprüche 9 bis 12, wobei die Wellenlänge des Lichtes im Bereich von etwa 700 bis etwa 1020 nm liegt.

**14.** Verfahren nach einem der Ansprüche 9 bis 13, wobei die Trockenobjektivlinse eine numerische Apertur von etwa 0,4 bis etwa 0,9 hat.

**15.** Optisches System zum Fokussieren eines Lichtstrahls, **dadurch gekennzeichnet, dass** es Folgendes umfasst:

einen Kollimator zum Einstellen einer Divergenz des Lichtstrahls, um einen kollimierten Strahl zu erzeugen, wobei der Kollimator eine Zerstreuungslinse und eine Sammellinse umfasst, wobei die Divergenz des kollimierten Strahls von einer Distanz zwischen der Zerstreuungslinse und der Sammellinse abhängt;
einen Scanner zum Lenken des kollimierten Strahls auf eine Fokussiervorrichtung zum Fokussieren des Strahls auf einen Brennpunkt und zum Scannen des fokussierten Strahls in aufeinanderfolgenden Scanpositionen; und
einen Controller zum Steuern der Distanz zwischen den Linsen zum Einstellen der Divergenz des kollimierten Strahls auf der Basis der aktuellen Scanposition, so dass der Brennpunkt im Wesentlichen in einer Brennebene an allen aufeinanderfolgenden Scanpositionen abgetastet wird.

**Revendications**

**1.** Système de stéréolithographie multiphotonique, comprenant :

une source lumineuse générant un faisceau de lumière présentant une longueur d'onde sélectionnée pour induire une absorption multiphotonique dans un matériau cible ;

**caractérisé par**

un extenseur optique comprenant une lentille divergente et une lentille convergente, positionné dans une voie dudit faisceau pour étendre ledit faisceau à travers lesdits lentilles afin de produire un faisceau collimaté de ladite lumière, une divergence dudit faisceau collimaté dépendant d'une distance entre ladite lentille divergente et ladite lentille convergente ;

un dispositif de focalisation comprenant une lentille d'objectif sèche, positionné dans une voie dudit faisceau collimaté pour focaliser ledit faisceau collimaté sur ledit matériau cible afin d'induire ladite absorption multiphotonique dans ledit matériau cible à un rétrécissement de faisceau dudit faisceau focalisé ;

un scanner, positionné dans ladite voie dudit faisceau collimaté entre ledit extenseur et ledit dispositif de focalisation pour rediriger ledit faisceau collimaté vers ledit dispositif de focalisation afin de balayer ledit rétrécissement de faisceau sur ledit matériau cible à des positions de balayage successives ; et

un organe de commande régulant un ajustement de ladite distance entre ladite lentille divergente et ladite lentille convergente sur la base de la position de balayage actuelle de sorte que ledit rétrécissement de faisceau soit balayé sensiblement dans un plan pour toutes lesdites positions de balayage successives.

2. Système selon la revendication 1, dans lequel chacune desdites positions de balayage successives est associée à une longueur présélectionnée respective, et ledit organe de commande ajuste ladite résistance à la longueur présélectionnée qui est associée à la position de balayage actuelle.

3. Système selon la revendication 1 ou 2, dans lequel ledit organe de commande est en communication avec ledit extenseur et ledit scanner pour synchroniser ledit ajustement de ladite distance avec le balayage dudit faisceau collimaté.

4. Système selon l'une quelconque des revendications 1 à 3, dans lequel ladite absorption multiphotonique est une absorption biphotonique.

5. Système selon l'une quelconque des revendications 1 à 4, dans lequel ladite source lumineuse est une source laser, et ladite longueur d'onde se trouve dans la plage d'environ 700 à environ 1020 nm.

6. Système selon l'une quelconque des revendications 1 à 5, dans lequel ladite lentille d'objectif sèche a une ouverture numérique d'environ 0,4 à environ 0,9.

7. Système selon l'une quelconque des revendications 1 à 6, dans lequel ledit dispositif de focalisation est un microscope.

8. Système selon l'une quelconque des revendications 1 à 7, dans lequel ledit scanner est un scanner galvanomètre.

9. Procédé de stéréolithographie multiphotonique, comprenant :

la génération d'un faisceau de lumière présentant une longueur d'onde sélectionnée pour induire une absorption multiphotonique dans un matériau cible ;

**caractérisé par**

l'extension dudit faisceau par l'intermédiaire d'un extenseur optique comprenant une lentille divergente et une lentille convergente,pour produire un faisceau collimaté de ladite lumière, une divergence dudit faisceau collimaté dépendant d'une distance entre ladite lentille divergente et ladite lentille convergente ;

la focalisation dudit faisceau collimaté sur ledit matériau cible par l'intermédiaire d'un dispositif de focalisation comprenant une lentille d'objectif sèche, afin d'induire ladite absorption multiphotonique dans ledit matériau cible à un rétrécissement de faisceau dudit faisceau focalisé ;

la redirection dudit faisceau collimaté vers ledit dispositif de focalisation afin de balayer ledit faisceau focalisé sur ledit matériau cible à des positions de balayage successives ; et

l'ajustement de ladite distance entre ladite lentille divergente et ladite lentille convergente sur la base de la position de balayage actuelle de sorte que ledit rétrécissement de faisceau soit balayé sensiblement dans un plan à toutes lesdites positions de balayage successives.

10. Procédé selon la revendication 9, dans lequel chacune desdites positions de balayage successives est associée à une longueur présélectionnée respective, et ledit ajustement de ladite distance comprend l'ajustement de ladite résistance à la longueur présélectionnée qui est associée à la position de balayage actuelle.

11. Procédé selon la revendication 9 ou 10, dans lequel ladite redirection et ledit ajustement sont synchronisés.

12. Procédé selon l'une quelconque des revendications 9 à 11, dans lequel ladite absorption multiphotonique est une absorption biphotonique.

13. Procédé selon l'une quelconque des revendications 9 à 12, dans lequel ladite longueur d'onde de ladite lumière se trouve dans la plage d'environ 700 à environ 1020 nm.

14. Procédé selon l'une quelconque des revendications 9 à 13, dans lequel ladite lentille d'objectif sèche a une ouverture numérique d'environ 0,4 à environ 0,9.

15. Système optique pour focaliser un faisceau de lumière, **caractérisé en ce qu'**il comprend :

un collimateur pour ajuster une divergence dudit faisceau de lumière pour produire un faisceau collimaté, ledit collimateur comprenant une lentille divergente et une lentille convergente, ladite divergence dudit faisceau collimaté dépendant d'une distance entre ladite lentille divergente et ladite lentille convergente ;
un scanner pour diriger ledit faisceau collimaté sur un dispositif de focalisation afin de focaliser ledit faisceau sur un point focal et de balayer le faisceau focalisé à des positions de balayage successives ; et
un organe de commande pour réguler ladite distance entre lesdites lentilles pour ajuster ladite divergence dudit faisceau collimaté sur la base de la position de balayage actuelle de sorte que ledit point focal soit balayé sensiblement dans un plan focal à toutes lesdites positions de balayage successives.

**FIG. 1**

**FIG. 2**

**FIG. 3**

**FIG. 4**

**FIG. 5**

**FIG. 6**

**EP 2 174 177 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10111422 A
- US 6025114 A